(19) Europäisches Patentamt
European Patent Office
Office européen des brevets

(11) **EP 2 350 495 B1**

(12) **FASCICULE DE BREVET EUROPEEN**

(45) Date de publication et mention
de la délivrance du brevet:
**26.09.2012   Bulletin 2012/39**

(51) Int Cl.:
*F16H 55/28* (2006.01)    *B62D 3/12* (2006.01)

(21) Numéro de dépôt: **09760547.1**

(86) Numéro de dépôt international:
**PCT/FR2009/052094**

(22) Date de dépôt: **29.10.2009**

(87) Numéro de publication internationale:
**WO 2010/052412 (14.05.2010 Gazette 2010/19)**

(54) **DISPOSITIF DE POUSSOIR A EXCENTRIQUE POUR DIRECTION DE VEHICULE AUTOMOBILE**

AUSSERMITTIGE DRÜCKERVORRICHTUNG ZUM LENKEN EINES KRAFTFAHRZEUGS

OFF-CENTRED PUSHER DEVICE FOR STEERING AN AUTOMOBILE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité:  **06.11.2008   FR 0806207**

(43) Date de publication de la demande:
**03.08.2011   Bulletin 2011/31**

(73) Titulaire: **JTEKT Europe**
**69540 Irigny (FR)**

(72) Inventeurs:
• **PLATARET, Nicolas**
**F-69630 Chaponost (FR)**
• **BROCHOT, Patrice**
**F-69600 Oullins (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**EP-A- 0 770 538      FR-A- 2 219 868**
**US-B1- 6 247 375**

**Description**

La présente invention concerne, de manière générale, les systèmes de direction à crémaillère des véhicules automobiles. Plus particulièrement, cette invention se rapporte à un dispositif de poussoir pour direction de véhicule automobile. Encore plus particulièrement, il s'agit ici d'un dispositif de poussoir dit à excentrique.

Dans la plupart des systèmes de direction, qui équipent actuellement les véhicules automobiles, un pignon de direction est lié en rotation avec une colonne de direction, manoeuvrée à l'aide du volant de conduite du véhicule, souvent avec l'aide d'une assistance hydraulique ou électrique. Le pignon de direction est en prise avec une crémaillère, montée coulissante en direction longitudinale dans un carter de direction. Les deux extrémités de la crémaillère, extérieures au carter, sont accouplées respectivement à deux biellettes de direction, qui sont elles-mêmes associées respectivement aux roues directrices gauche et droite du véhicule. Ainsi, la rotation du volant dans un sens ou dans l'autre, transmise par la colonne de direction au pignon, est convertie en une translation correspondante de la crémaillère qui, par l'intermédiaire des biellettes, provoque l'orientation des roues directrices pour un braquage à droite ou un braquage à gauche.

Dans un tel système de direction, le mécanisme pignon-crémaillère, lié au train de roulement avant du véhicule par l'intermédiaire des biellettes, est soumis à des remontées d'efforts, à des chocs et à des vibrations, suivant l'état de la chaussée parcourue par le véhicule. En raison de l'angle formé par les biellettes avec la crémaillère, il peut alors se produire un effort sur la crémaillère, qui risque de l'écarter du pignon. Pour cette raison, la crémaillère est habituellement appliquée de façon permanente contre le pignon par un dispositif dit de poussoir, agissant élastiquement sur le dos de la crémaillère dans la région du pignon pour presser fortement la denture de cette crémaillère contre le pignon. Le poussoir limite ainsi le jeu entre les dentures respectives du pignon et de la crémaillère, et ce poussoir permet aussi de contrôler l'effort de coulissement de la crémaillère dans le carter. L'action du poussoir permet également de compenser des défauts de rectitude de la crémaillère.

Dans sa forme de réalisation la plus courante, le dispositif de poussoir comprend le poussoir proprement dit, qui est une pièce rigide montée mobile en translation dans une direction sensiblement perpendiculaire à l'axe longitudinal de la crémaillère, et sollicitée vers le dos de la crémaillère par des moyens à ressort eux aussi disposés suivant une direction sensiblement perpendiculaire à l'axe longitudinal de la crémaillère.

Au contraire, dans le cas d'un dispositif de poussoir dit à excentrique, tel que décrit par exemple dans le brevet US 6247375 B1 (ou dans les documents de brevets FR 2219868 et EP 0770538 A2), un support rotatif comprend une partie excentrée qui pousse la crémaillère vers le pignon, le support rotatif étant monté tournant dans un carter, tel que le carter d'un pignon, autour d'un axe parallèle à l'axe longitudinal de la crémaillère. La périphérie interne de ce support est excentrée par rapport à sa périphérie externe, de telle manière que, lorsqu'il tourne dans le carter, sa partie excentrée soit appliquée contre le dos de la crémaillère et repousse celle-ci vers les dents du pignon, afin de les maintenir en prise. Le support est sollicité en rotation dans un sens par un ressort (voir en particulier le document FR 2 219 868 précité), de manière à rattraper le jeu provoqué par les imprécisions de montage et par l'usure entre les dents de la crémaillère et les dents du pignon.

Dans le cas du brevet US 6247375 B1 précité, la partie interne du support rotatif comporte un évidement dans lequel est monté un ressort à lame, qui vient en appui sur la crémaillère et permet ainsi un léger mouvement radial pour compenser les défauts de rectitude de la crémaillère.

Les avantages d'un dispositif de poussoir à excentrique résident, en particulier, dans la compacité d'un tel dispositif, et dans le fait qu'il peut être rendu irréversible, tout retour en arrière du support rotatif (à partir d'une certaine position angulaire atteinte) étant rendu impossible.

Toutefois, dans l'agencement selon le brevet US 6247375 B1, le fait de placer le ressort à lame entre le support rotatif et la crémaillère a pour conséquence que, lorsque la crémaillère est sollicitée par des efforts variables, celle-ci n'appuie pas toujours de la même façon sur le ressort, ce qui peut provoquer des pertes de contact entre ledit ressort et la crémaillère. De plus, le ressort à lame change de position dans le temps, compte tenu de la rotation progressive du support, ce qui provoque une variation de l'orientation et de l'intensité des efforts appliqués sur la crémaillère. Tout ceci peut dégrader fortement la fonction réalisée par le dispositif de poussoir à excentrique.

La présente invention vise à remédier à ces inconvénients, donc à améliorer le fonctionnement d'un dispositif de poussoir à excentrique pour direction à crémaillère, par une meilleure maîtrise des mouvements et positions des organes du dispositif de poussoir.

A cet effet, l'invention a pour objet un dispositif de poussoir à excentrique pour direction à crémaillère de véhicule automobile, dispositif qui comprend de façon connue en soi un support rotatif dont la périphérie interne est excentrée par rapport à la périphérie externe, ledit support étant sollicité en rotation dans un élément élastique, et étant prévu pour être appliqué par sa périphérie interne excentrée contre le dos de la crémaillère pour repousser celle-ci vers les dents du pignon de direction, ce dispositif de poussoir à excentrique étant essentiellement caractérisé par le fait que le support rotatif est monté tournant dans un boîtier, lui-même monté coulissant suivant une direction sensiblement parallèle au plan de la denture de la crémaillère, et orthogonale à l'axe longitudinal de cette crémaillère, l'élément élastique étant disposé entre la paroi du boîtier coulissant et ledit support rotatif avec périphérie interne excentrée, pour solliciter ce support en rotation dans un sens prédéfini, et d'autres moyens élastiques , à effet amortissant, étant disposés entre le boîtier coulissant et un élément fixe, tel que le carter de direction, pour agir sur ledit boîtier de préférence suivant toutes directions relativement à la crémaillère.

Ainsi, le principe de l'invention consiste à séparer la fonction de rattrapage des jeux dus à l'assemblage et à l'usure, ce qui est réalisé par le support excentrique lui-même, d'une part, et la fonction d'absorption des défauts de rectitude de la crémaillère et éventuellement du pignon, ce qui est réalisé par le mouvement de translation du boîtier, soumis à l'action de moyens à ressort amortissants eux-mêmes en appui sur le carter, d'autre part. Cette dissociation des deux fonctions permet, en particulier, d'avoir un bon guidage de la crémaillère qui repose directement sur un support rigide à partie excentrée. Elle permet également de limiter les causes de dégradation de l'irréversibilité du dispositif de poussoir, en stabilisant les appuis du support rotatif.

Les moyens à ressort, qui sollicitent en rotation ledit support rotatif, sont ici disposés entre ce support rotatif et le boîtier coulissant ; ils prennent la forme d'un élément élastique, qui peut être avantageusement constitué par un ressort de compression, dont une extrémité est en appui sur la paroi intérieure du boîtier coulissant, et dont l'autre extrémité est engagée sur un téton solidaire d'un bras radial, lui-même solidaire du support rotatif avec périphérie interne excentrée.

Les moyens élastiques à effet amortissant, disposés entre le boîtier coulissant et le carter de direction, peuvent être constitués par au moins un joint torique, notamment par deux joints toriques respectivement montés dans des gorges annulaires correspondantes ménagées vers les deux extrémités du boîtier coulissant.

Avantageusement, le support rotatif à périphérie interne excentrée n'entoure pas complètement la crémaillère, mais il présente une forme arquée et « en coin ». Ainsi, tout le mécanisme reste compact et il peut être placé du côté du dos de la crémaillère, à l'opposé du pignon de direction. En plus des avantages d'encombrement et d'économie d'une telle disposition, celle-ci permet le montage de deux soufflets d'étanchéité et de deux butées de fin de course identiques à chaque extrémité du carter de direction, tout en ne formant aucun obstacle entre le pignon de direction et la butée de fin de course de la crémaillère.

L'invention sera mieux comprise à l'aide de la description qui suit, en référence au dessin schématique annexé représentant, à titre d'exemple, une forme d'exécution de ce dispositif de poussoir à excentrique pour direction de véhicule automobile :

Figure 1 est une vue de face d'un carter de direction à crémaillère et de certains composants adjacents, un tel carter pouvant être équipé du dispositif de poussoir à excentrique objet de l'invention ;

Figure 2 est une vue en coupe passant par le dispositif de poussoir à excentrique objet de l'invention, le plan de coupe étant perpendiculaire à l'axe longitudinal de la crémaillère ;
Figure 3 est un schéma illustrant la condition d'irréversibilité de ce dispositif de poussoir à excentrique ;
Figure 4 est une vue en perspective éclatée, montrant les composants de ce dispositif de poussoir à excentrique et une portion de la crémaillère.

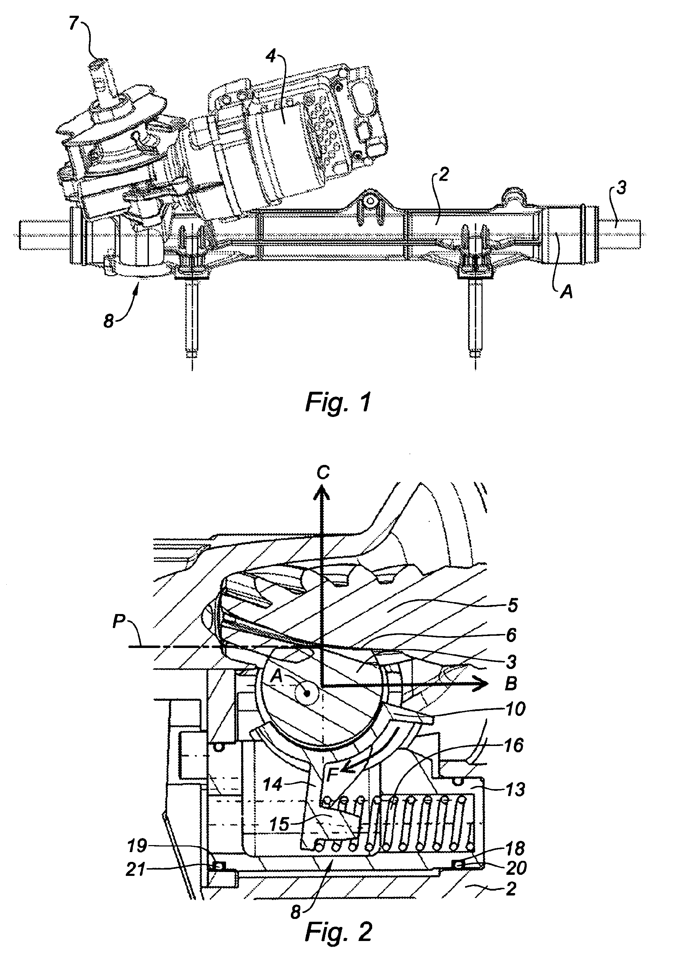

La figure 1 montre partiellement un système de direction de véhicule automobile, avec son carter de direction 2 qui s'étend suivant un axe longitudinal A, qui est aussi l'axe longitudinal de la crémaillère 3 montée coulissante dans le carter 2. Dans l'exemple illustré, il s'agit d'une direction assistée électrique, avec un moteur électrique d'assistance 4 qui est accouplé à un pignon de direction 5 (voir aussi figure 2), en prise avec la denture 6 de la crémaillère 3, le plan de cette denture 6 étant indiqué en P. On a encore indiqué en 7 l'arbre d'entrée auquel est accouplée la colonne de direction (non représentée), manoeuvrée à l'aide du volant de conduite du véhicule.

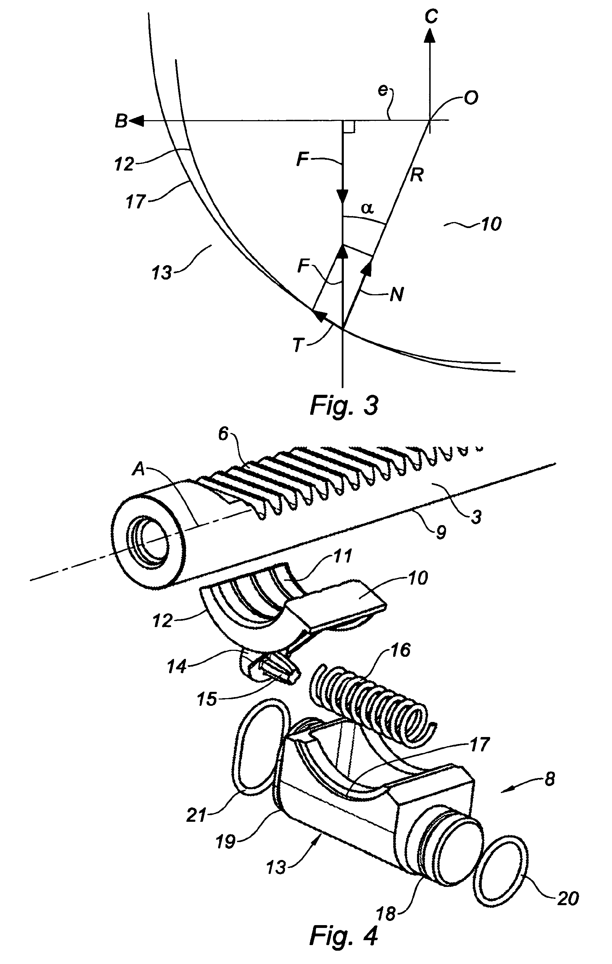

Un dispositif de poussoir, désigné dans son ensemble par la référence numérique 8, est prévu à proximité du pignon de direction 5, pour presser la denture 6 de la crémaillère 3 contre le pignon 5, le dispositif de poussoir 8 étant représenté en détail sur les figures 2 et 4.

Le dispositif de poussoir 8 est placé du côté du dos 9 de la crémaillère 3, autrement dit à l'opposé de la denture 6 de cette crémaillère 3 et aussi à l'opposé du pignon 5, ce dispositif de poussoir 8 étant logé dans une partie correspondante du carter de direction 2.

Le dispositif de poussoir 8, du type dit à excentrique, comprend comme composant essentiel un support excentrique 10, qui est ici une pièce de profil arrondi et, plus particulièrement, une pièce qui possède une forme arquée et « en coin ». Le support 10 présente une périphérie interne 11 en arc de cercle qui est excentrée par rapport à sa périphérie externe 12, elle aussi en arc de cercle. La périphérie interne 11, ainsi excentrée, du support 10 se trouve appliquée contre le dos 9 de la crémaillère 3.

Le support excentrique 10 se trouve monté et guidé sur un boîtier 13, d'allure générale cylindrique, qui est lui-même guidé en translation dans la direction d'un axe B, parallèle au plan P de la denture 6 de la crémaillère 3, et orthogonal à l'axe longitudinal A de cette crémaillère 3. Le guidage en translation du boîtier coulissant 13 est assuré par une liaison du type « glissière » avec la partie correspondante du carter de direction 2.

Le support excentrique 10 possède un bras radial 14, qui s'étend à l'intérieur du boîtier coulissant 13 et qui porte, vers son extrémité extérieure, un téton 15. Un ressort de compression 13, logé dans le boîtier 13, possède une extrémité appuyée sur la paroi intérieure de ce boîtier 13, vers l'une des extrémités dudit boîtier, et une autre extrémité engagée sur le téton 15 du bras radial 14.

La périphérie externe 12 en arc de cercle de support excentrique 10 est appliquée et guidée contre une surface complémentaire 17 appartenant au boîtier 13, de manière à réaliser un contact glissant qui guide en rotation le support excentrique 11 autour d'un centre de rotation O (voir aussi figure 3). L'action du ressort de compression 16 sur le support excentrique 10, exercée par l'intermédiaire du bras radial 14, se traduit par une rotation dans le sens horaire, comme indiqué par une flèche F sur la figure 2.

Enfin, le boîtier coulissant 13 comporte, vers ses deux extrémités, des gorges annulaires respectives 18 et 19, dans lesquelles sont montés deux joints toriques respectifs 20 et 21, aussi en contact avec la paroi intérieure du carter de direction 2. L'une des extrémités du boîtier coulissant 13 est circulaire, de même que le joint torique 20 correspondant. L'autre extrémité du boîtier coulissant 13 présente une section de forme oblongue, de même que le joint torique 21 correspondant, de manière à immobiliser en rotation ce boîtier coulissant 13 - voir en particulier la figure 4.

En fonctionnement, le support excentrique 10 glissant et tournant relativement au boîtier coulissant 13 assure la fonction de rattrapage des jeux dus à l'assemblage et à l'usure. Durant toute la durée de vie du système de direction concerné, le ressort 16 applique un effort sur le support excentrique 10, entraînant sa rotation selon la flèche F relativement au boîtier coulissant 13 dès qu'un jeu dû à l'usure apparaît entre la crémaillère 3 et le pignon de direction 5. Cela permet de compenser l'intégralité des jeux dus à l'usure, jeux qui sont générateurs de bruits et de vibrations.

La géométrie du support excentrique 10 et du boîtier coulissant 13, et les matériaux constitutifs de ces composants, sont choisis de manière à garantir une irréversibilité en rotation du support excentrique 10 relativement au boîtier coulissant 13, c'est-à-dire que le seul mouvement relatif permis est la rotation dans le sens de la flèche F sous l'effet de la poussée du ressort 16, toute rotation de sens opposé (sens anti-horaire) étant rendue impossible, et ceci quelle que soit la charge exercée par la crémaillère 3 sur le poussoir à excentrique.

Pour obtenir une telle irréversibilité, il convient que le rapport entre la valeur de l'excentration e et la distance radiale entre le centre O de la périphérie externe 12 du support excentrique 10 et le point de contact entre ce support excentrique 10 et le boîtier coulissant 13 soit inférieur à la valeur du coefficient de frottement statique entre le support excentrique 10 et le boîtier coulissant 13, pour des valeurs d'excentration faibles.

Cette condition d'irréversibilité est illustrée par le schéma de la figure 3 et correspond à la relation :

$$e/(R.\cos{(\alpha)}) < f$$

soit, pour un angle $\alpha$ dont la valeur est proche de zéro :

$$e/R < f$$

formule dans laquelle :

- e est la valeur de l'excentration, c'est-à-dire la distance minimale entre l'axe longitudinal de la périphérie interne 11 du support excentique 10, en contact avec la crémaillère 3, et l'axe longitudinal de la périphérie externe 12 du support excentrique 10, en contact avec le boîtier coulissant 13,
- R est le rayon de contact, autrement dit la distance entre le centre O de la périphérie externe 12 du support excentrique 10 et le point de contact,
- f est le coefficient de frottement statique entre les deux surfaces en contact.

Les deux joints toriques 20 et 21 assurent la fonction d'absorption des défauts d'engrènement du pignon de direction 5 et de la denture 6 de la crémaillère 3. Grâce à ces joints toriques 20 et 21, les défauts d'engrènement sont absorbés suivant les axes suivants :

- axe longitudinal A de la crémaillère 3,
- axe B parallèle au plan P de la denture 6 de la crémaillère 3 et orthogonal à l'axe longitudinal A de cette crémaillère,
- axe C perpendiculaire au plan P de la denture 6 de la crémaillère.

La raideur et l'amortissement des éléments élastiques, que sont les deux joints toriques 20 et 21, sont choisis de manière à permettre un déplacement relatif maîtrisé des dents du pignon de direction 5 et des dents de la crémaillère 3, pour éviter les chocs entre ces pièces et la production de bruits et de vibrations.

On ne s'éloignerait pas du cadre de l'invention, telle que définie dans les revendications annexées :

- en modifiant des détails de forme des composants du dispositif, tels que le support excentrique et le boîtier coulissant ;
- en ayant recours à tous équivalents des moyens décrits, notamment en remplaçant le ressort de compression, agissant sur le support excentrique, par un ressort d'un autre type, tel qu'un ressort de traction ou un ressort de torsion, ou encore un ressort à lame ou un ressort en spirale,
- en remplaçant le double joint torique par tout autre élément élastique à propriétés amortissantes, tel qu'une lame ressort en matériau adapté, ou un bloc en élastomère, ou un ressort de compression,
- en destinant ce dispositif de poussoir à des systèmes de direction de tous types, pouvant être des directions manuelles ou des directions assistées électriques ou hydrauliques.

**Revendications**

1. Dispositif de poussoir à excentrique pour direction à crémaillère de véhicule automobile, le dispositif de poussoir (8) comprenant un support rotatif (10) dont la périphérie interne (11) est excentrée par rapport à la périphérie externe (12), ledit support (10) étant sollicité en rotation dans un sens par un élément élastique (16), et étant prévu pour être appliqué par sa périphérie interne (11) excentrée contre le dos (9) de la crémaillère (3) pour repousser celle-ci vers les dents du pignon de direction (5), **caractérisé en ce que** le support rotatif (10) est monté tournant dans un boîtier (13), lui-même monté coulissant suivant une direction (B) sensiblement parallèle au plan (P) de la denture (6) de la crémaillère (3), et orthogonale à l'axe longitudinal (A) de cette crémaillère (3), l'élément élastique (16) étant disposé entre la paroi du boîtier coulissant (13) et ledit support rotatif (10) avec périphérie interne excentrée (11), pour solliciter ce support (10) en rotation dans un sens prédéfini (F), et d'autres moyens élastiques (20, 21) étant disposés entre le boîtier coulissant (13) et un élément fixe, tel que le carter de direction (2), pour agir sur ledit boîtier (13) de préférence suivant toutes directions (A, B, C) relativement à la crémaillère (3).

2. Dispositif de poussoir à excentrique selon la revendication 1, caractérisé à ce que l'élément élastique, sollicitant ledit support rotatif (10) en rotation, est constitué par un ressort de compression (16), dont une extrémité est en appui sur la paroi intérieure du boîtier coulissant (13), et dont l'autre extrémité est engagée sur un téton (15) solidaire d'un bras radial (14), lui-même solidaire du support rotatif (10) avec périphérie interne excentrée (11).

3. Dispositif de poussoir à excentrique selon la revendication 1 ou 2, **caractérisé en ce que** les moyens élastiques à effet amortissant, disposés entre le boîtier coulissant (13) et le carter de direction (2), sont constitués par au moins un joint torique (20, 21).

4. Dispositif de poussoir à excentrique selon la revendication 3, caractérisé à ce que sont prévus deux joints toriques (20, 21) respectivement montés dans des gorges annulaires (18, 19) ménagées vers les deux extrémités du boîtier (13).

5. Dispositif de poussoir à excentrique selon la revendication 4, caractérisé à ce qu'une extrémité du boîtier coulissant (13) présente une section de forme oblongue, de même que le joint torique (21) correspondant, de manière à immobiliser en rotation ce boîtier coulissant (13).

6. Dispositif de poussoir à excentrique selon l'une des revendications 1 à 5, caractérisé à ce que la géométrie dudit support rotatif (10) et du boîtier coulissant (13), et les matériaux constitutifs de ces composants, sont choisis de manière à garantir une irréversibilité en rotation (F) dudit support rotatif (10) relativement au boîtier coulissant (13).

7. Dispositif de poussoir à excentrique selon l'une des revendications 1 à 6, caractérisé à ce que le support rotatif (10) à périphérie interne excentrée (11) n'entoure pas complètement la crémaillère (3), mais présente une forme arquée et « en coin », tout le dispositif de poussoir (8) étant ainsi placé du côté du dos (9) de la crémaillère (3), à l'opposé du pignon de direction (5).

**Claims**

1. Off-centred pusher device for motor vehicle rack steering, the pusher device (8) comprising a rotary support (10) whose inner periphery (11) is eccentric relative to the outer periphery (12), said support (10) being urged in rotation in one direction by an elastic element (16), and being designed so that it can be applied via its inner eccentric periphery (11) against the back (9) of the rack (3) to press the latter towards the teeth of the steering pinion (5), **characterized in that** the rotary support (10) is mounted in rotation in a casing (13), itself mounted slidingly in a direction (B) substantially parallel to the plane (P) of the teeth (6) of the rack (3), and orthogonal to the longitudinal axis (A) of this rack (3), the elastic element (16) being arranged between the wall of the sliding casing (13) and said rotary support (10) with eccentric inner periphery (11) to urge this support (10) in rotation in a predefined direction (F), and other elastic means (20, 21) being arranged between the sliding casing (13) and a fixed element such as the steering housing (2) to act on said casing (13) preferably in all directions (A, B, C) relative to the rack (3).

2. The off-centred pusher device according to claim 1, **characterized in that** the elastic element urging said rotary support (10) in rotation is formed of a compression spring (16), of which one end bears upon the inner wall of the sliding casing (13), and whose other end is engaged on a stud pin (15) secured to a radial arm (14), itself secured to the rotary support (10) with eccentric inner periphery (11).

3. The off-centred pusher device according to claim 1 or 2, **characterized in that** the elastic means with damping effect arranged between the sliding casing (13) and the steering housing (2) are formed of at least one O-ring (20, 21).

**4.** The off-centred pusher device according to claim 3, **characterized in that** two O-rings (20, 21) are provided, respectively mounted in annular grooves (18, 19) arranged towards the two ends of the casing (13).

**5.** The off-centred pusher device according to claim 4, **characterized in that** one end of the sliding casing (13) has a cross-section of oblong shape, similar to the corresponding O-ring (21) so as to immobilize this sliding casing (13) in rotation.

**6.** The off-centred pusher device according to any of claims 1 to 5, **characterized in that** the geometry of said rotary support (10) and of the sliding casing (13), and the constituent materials of these components, are chosen so as to guarantee irreversibility of rotation (F) of said rotary support (10) relative to the sliding casing (13).

**7.** The off-centred pusher device according to any of claims 1 to 6, **characterized in that** the rotary support (10) with eccentric inner periphery (11) does not fully surround the rack (3), but is of arched « wedge-like » shape, the entire pusher device (8) therefore being positioned on back side (9) of the rack (3) directed away from the steering pinion (5).

**Patentansprüche**

**1.** Außermittige Drückervorrichtung für eine Zahnstangenlenkung eines Kraftfahrzeugs, wobei die Drückervorrichtung (8) eine Drehunterlage (10) umfasst, deren innerer Umfang (11) im Verhältnis zum äußeren Umfang (12) außermittig ist, wobei die Unterlage (10) von einem elastischen Element (16) in eine Richtung drehend beansprucht wird und vorgesehen ist, um mit ihrem außermittigen inneren Umfang (11) an der Rückseite (9) der Zahnstange (3) anzuliegen, um diese in Richtung der Zähne des Lenkungszahnrads (5) zurückzudrücken, **dadurch gekennzeichnet, dass** die Drehunterlage (10) in einem Gehäuse (13) drehend montiert ist, das selbst gemäß einer Richtung (B) etwa parallel zur Ebene (P) der Zahnung (6) der Zahnstange (3) und orthogonal zur Längsachse (A) dieser Zahnstange (3) gleitend montiert ist, wobei das elastische Element (16) zwischen der Wand des gleitenden Gehäuses (13) und der Drehunterlage (10) mit außermittigem innerem Umfang (11) angeordnet ist, um diese Unterlage (10) drehend in eine vorbestimmte Richtung (F) zu beanspruchen, wobei weitere elastische Mittel (20, 21) zwischen dem gleitenden Gehäuse (13) und einem starren Element wie dem Lenkgehäuse (2) angeordnet sind, um auf das Gehäuse (13) vorzugsweise gemäß aller Richtungen (A, B, C) relativ zur Zahnstange (3) einzuwirken.

**2.** Außermittige Drückervorrichtung nach Anspruch 1, **dadurch gekennzeichnet, dass** das elastische Element, das die Drehunterlage (10) drehend beansprucht, von einer Druckfeder (16) gebildet wird, von der sich ein Ende auf der Innenwand des gleitenden Gehäuses (13) abstützt und deren anderes Ende auf einem Zapfen (15) sitzt, der mit einem radialen Arm (14) verbunden ist, der selbst mit der Drehunterlage (10) mit außermittigem inneren Umfang (11) verbunden ist.

**3.** Außermittige Drückervorrichtung nach einem der Ansprüche 1 oder 2, **dadurch gekennzeichnet, dass** die elastischen Mittel mit dämpfender Wirkung, die zwischen dem gleitenden Gehäuse (13) und dem Lenkgehäuse (2) platziert sind, von mindestens einem O-Ring (20, 21) gebildet werden.

**4.** Außermittige Drückervorrichtung nach Anspruch 3, **dadurch gekennzeichnet, dass** zwei O-Ringe (20, 21) vorgesehen sind, die jeweils in ringförmigen Aushöhlungen (18, 19) montiert sind, die in Richtung der zwei Enden des Gehäuses (13) eingearbeitet sind.

**5.** Außermittige Drückervorrichtung nach Anspruch 4, **dadurch gekennzeichnet, dass** ein Ende des gleitenden Gehäuses (13) ebenso wie der entsprechende O-Ring (21) derart einen länglichen Querschnitt aufweist, dass dieses gleitende Gehäuses (13) drehend blockiert wird.

**6.** Außermittige Drückervorrichtung nach einem der Ansprüche 1 bis 5, **dadurch gekennzeichnet, dass** die Geometrie der Drehunterlage (10) und des gleitenden Gehäuses (13) und die Materialien, aus denen diese Bauteile bestehen, derart ausgewählt sind, dass eine Unumkehrbarkeit in Rotation (F) der Drehunterlage (10) relativ zum gleitenden Gehäuse (13) garantiert wird.

**7.** Außermittige Drückervorrichtung nach einem der Ansprüche 1 bis 6, **dadurch gekennzeichnet, dass** die Drehunterlage (10) mit außermittigem inneren Umfang (11) die Zahnstange (3) nicht vollständig umgibt, sondern eine gebogene und "Eck"-Form aufweist, wobei damit die gesamte Drückervorrichtung (8) auf der Rückseite (9) der Zahnstange (3) gegenüber dem Lenkungszahnrad (5) platziert ist.

**Fig. 1**

**Fig. 2**

Fig. 3

Fig. 4

## RÉFÉRENCES CITÉES DANS LA DESCRIPTION

**Documents brevets cités dans la description**

- US 6247375 B1
- FR 2219868
- EP 0770538 A2